# EUROPÄISCHE PATENTANMELDUNG

(11) **EP 1 101 807 A2**
(43) Veröffentlichungstag der Anmeldung: **23.05.2001**
(21) Anmeldenummer: 00123283.4
(22) Anmeldetag: 27.10.2000
(51) Int. Cl.: C09J 7/02

(54) **Klebeband zum Maskieren einer KTL-Grundierung**

(30) Priorität: 20.11.1999 DE 19955856
(71) Anmelder: Beiersdorf AG, 20245 Hamburg (DE)
(72) Erfinder: Schümann, Uwe, Dr., 25421 Pinneberg (DE); Böhm, Nicolai, Dr., 20257 Hamburg (DE); Krupke, Siegfried, 25463 Tornesch (DE); Wappler, Ulrike, 20253 Hamburg (DE)

(57) **Zusammenfassung**

Einseitig mit einer Selbstklebemasse ausgerüstetes Klebeband, umfassend ein Trägermaterial aus einer mit einem vernetzten, ungeschäumten Polyurethan beschichteten Polyesterfolie.

## Beschreibung

Die Erfindung betrifft ein Klebeband insbesondere zum Maskieren von Fensterflanschen bevorzugt in Automobilrohkarosserien, die mit kathodischem Tauchlack (KTL) beschichtet sind, sowie Verfahren zur Herstellung des Klebebands. Das Klebeband soll die Fensterflansche bei den nachfolgenden Lackier- und Einbrennprozessen vor dem Überlackieren derartig schützen, daß nach dem Abziehen des Klebebandes auf den füller- und decklack-freien Fensterflansch eine Automobilglasscheibe mit einem reaktiven PU-Scheibenkleber eingeklebt werden kann.

Automobilglasscheiben werden herkömmlich mit Gummidichtungen in der fertig lackierten Fahrzeugkarosserie fixiert. Dieses Verfahren wurde in den letzten Jahren zunehmend durch das Einkleben der Scheiben mit Reaktivklebstoffen (zum Beispiel auf Polyurethanbasis) ersetzt. Dabei wird die Scheibe mit dem Kleber bestrichen und so auf die Karosserie aufgesetzt, daß die Kleberaupe auf den Fensterflansch aufgedrückt wird.

Die eingeklebten Scheiben, insbesondere die Windschutzscheiben, dienen heute als versteifendes Element der Karosserie. Im Extremfall vermeiden sie bei einem Überschlag des Fahrzeugs das Einknicken der Dachsäulen. Daher ist eine ausreichende Verklebungsfestigkeit für die Unfallsicherheit eines modernen Kraftfahrzeugs maßgeblich.

Moderne Autolacke bestehen aus diversen Schichten, die auf das geprimerte Karosseriemetall in folgender Reihenfolge aufgebracht werden (schematisiert):
- elektrophoretischer Tauchlack, meist kathodischer Tauchlack (KTL)
- Füller- oder Funktionsschicht
- Farblack
- Decklack

Nach Römpp Lexikon Chemie (Version 1.5, Stuttgart/New York: Georg Thieme Verlag 1998) stellt die elektrophoretische Lackierung (Elektrotauchlackierung) ein Tauchverfahren dar, bei dem die Beschichtung durch Einwirkung eines elektrischen Feldes (50 bis 400 V) erfolgt. Der zu lackierende, den elektrischen Strom leitende Körper wird als Anode oder Kathode in das Farbbad eingebracht, in der Praxis fungiert die Beckenwand als 2. Elektrode.
Die abgeschiedene Lackmenge ist der zugeführten Strommenge direkt proportional. Die elektrophoretische Lackierung wird besonders zur Grundierung, zum Beispiel in der Automobilindustrie eingesetzt. Es treten keine Spritzverluste auf, und die erhaltenen Beschichtungen sind auch an schwer zugänglichen Stellen sehr gleichmäßig. Bei nichtleitenden Unterlagen, zum Beispiel Kunststoffen, Glas, Keramik usw. bedient man sich zur Beschichtung der elektrostatischen Aufladung der Lackteilchen (sogenannte elektrostatische Lackierung).

Wird die Automobilscheibe nach abgeschlossenem Lackiervorgang auf den mitlackierten Fensterflansch geklebt, sind folgende Nachteile gegeben.
Da der Scheibenkleber auf den Decklack als Haftgrund abgestimmt sein muß, kann sich bei der Vielzahl der bei einem Hersteller verwendeten Decklacke eine unnötig hohe Komplexität ergeben, weil eine Vielzahl von passenden Klebern bereit gehalten werden muß. Wichtiger ist jedoch die Tatsache, daß die Gesamtverklebungsfestigkeit der Automobilscheibe von der schwächsten Stelle im vielschichtigen Lackaufbau abhängt und damit weit geringer sein kann als die Verklebungsfestigkeit des Klebers auf dem Decklack.

Es ist daher vorteilhaft, die Scheibe auf die unterste Lackschicht, die KTL-Schicht, aufzubringen. Die Zahl der verwendeten KTL-Präparate bei einem Hersteller ist üblicherweise geringer als die der Decklacke. Zum einen liegen damit wenige definierte Haftgründe für den Scheibenkleber vor, und zum anderen birgt der Aufbau geprimertes Metall/KTL/scheibenkleber mit zwei Grenzschichten eine geringere Gefahr des Bruches als ein komplexer Gesamtlackaufbau.

Zum Abdecken des Fensterflansches nach der Aufbringung des KTL läßt sich ein PVC-Plastisol verwenden, wie es in der EP 0 655 989 B1 beschrieben ist. Dieses wird in flüssiger Form auf den Fensterflansch aufgebracht, überlackiert und geliert während der Einbrennphase bei Temperaturen von mindestens 163 °C zu einem festen Film aus. Nachteilig an diesem Verfahren ist, daß für das Demaskieren nach erfolgtem Einbrennen ein "Anfassef" mechanisch freigelegt werden muß, bei dem leicht auch der KTL verletzt werden kann, was die Gefahr nachfolgender Korrosion birgt.
Der Plastisolstreifen kreuzt an den Fensterflanschen zum Teil mehrfach PVC-Nahtabdichtungen, die Schweißnähte auffüllen. Beim Ausgelieren werden häufig starke Verklebungen zwischen Nahtabdichtungen und PVC-Plastisol Fensterflanschabdeckung beobachtet, die eine problemlose Demaskierung verhindern. Ebenfalls zu beobachten sind plastisolbedingte Kontaminationen des Haftgrundes derart, daß sich ein Adhäsionsversagen an der Grenze zwischen Scheibenkleber und ehemals plastisolmaskiertem KTL zeigt.
Die geforderte Verklebungssicherheit der Scheibe ist so nicht gewährleistet.
Diesem kann zwar durch Einsatz eines Primers entgegengewirkt werden, doch ist dieser Schritt arbeitsintensiv, führt zu unerwünschten Lösungsmittelemissionen und kann durch versehentliches Verspritzen oder Tropfen auf dem Decklack Lackreparaturen nötig machen.

Eine vorteilhaftere Möglichkeit der Maskierung von Fensterflanschen ist die Verwendung von Klebebändern. Seit mehreren Jahren wird die Maskierung mit einem Naturkautschukkleber laminierten PVC-Polyester-Verbund, selbstklebend ausgerüstet mit einer Naturkautschukklebemasse, praktiziert. Dieses Klebeband wird analog der Plastisolraupe vor dem Füllern und Lackieren auf den KTL-beschichteten Fensterflansch geklebt und nach erfolgtem Einbrennen mitsamt den darauf aufgebrachten Lackschichten abgezogen. Die Applikation ist von Hand, aber auch automatisiert per Roboter möglich. Der Hauptnachteil dieses letztgenannten Produkts ist die Fehlerhäufigkeit bei der Demaskierung, da das Laminat zum vollflächigen und partiellen Spleißen sowie zum Reißen neigt. Insbesondere das partielle Spleißen stellt ein Sicherheitsrisiko dar, weil sich der Polyesterfilm, der auf dem Fensterflansch verbleibt, farblich nur wenig vom KTL abhebt und daher leicht übersehen werden kann. Diese Polyesterreste sind ein gänzlich ungeeignetes Haftmedium für Scheibenkleber und können so zu mangelnder Scheibenhaftung führen.
Ein weiterer Nachteil sowohl des letztgenannten Produkts als auch des PVC-Plastisols ist die problematische Entsorgung. Ein Deponieren ist aus Gründen der biologischen Langlebigkeit des PVCs unzweckmäßig. Ein Recyclen ist aus Gründen der Kontamination mit den diversen Lackschichten nicht möglich. Das Verbrennen birgt die Gefahr der Emission von Salzsäure und Dioxinen. Um dies zu vermeiden, sind in den Verbrennungsanlagen aufwendige Maßnahmen, wie zum Beispiel Rauchgaswäsche und sehr hohe Verbrennungstemperaturen notwendig.

Aufgabe der Erfindung ist es, ein Klebeband insbesondere zur Fensterflanschabdeckung mit einem Trägermaterial zu entwickeln, das die Nachteile des Standes der Technik nicht oder nicht in dem Maße zeigt. Insbesondere soll das Klebeband beim Demaskieren weder vollflächig noch partiell spleißen sowie nicht reißen. Weiterhin soll das Klebeband kein PVC enthalten.

Gelöst wird diese Aufgabe durch ein Klebeband, wie es im Hauptanspruch niedergelegt ist. Gegenstand der Unteransprüche sind dabei vorteilhafte Weiterbildungen des Klebebands.

Grundsätzlich geeignet als Trägermaterialien für ein Klebeband, das die für dieses Einsatzgebiet typischen hohen Temperaturen von bis zu 180°C über ca. 30 min. überstehen muß, sind Folien aus Polyester (Polyethylenterephthalat PET, Polyethylennaphtalat PEN), aber auch faserige Materialien wie Baumwoll-, aromatische Polyamid und Polyestergewebe oder Vliese. Nachteilig an Fasermaterialien ist die ihnen eigene geringe Dehnbarkeit, was sich erschwerend auf die Verklebbarkeit in Kurven auswirkt.

Soll das Band per Roboter verarbeitet werden, wird es mit starken Zugkräften beaufschlagt und muß daher zur Vermeidung einer Vordehnung, die in der Wärme zu einer hohen Rückstellspannung führt, über einen großen Zugmodul verfügen.

Die Anforderung an hohe Zugfestigkeit bei gleichzeitiger Temperaturresistenz über etliche Minuten leisten biaxial gereckte PET- oder PEN-Folien mit einem Reckverhältnis längs zu quer von ca. 3-4 zu 3-4. Problematisch an gereckten Polyesterfolien ist allerdings die geringe Weiterreißfestigkeit, sobald die Folienkante minimal verletzt ist. Da mit dem Abziehen des überlackierten Klebebandes der mehrschichtige Lackfilm aufgerissen wird und dieser stets eine geringfügig gezackte Kante aufweist, kommt es beim Abziehen einer reinen Polyesterfolie sehr häufig zum Reißen des Klebebandes. Weiterhin sind reine Polyesterfolien ein schlechter Haftgrund für die aufgetragenen Lackschichten. Die Folge ist ein Absplittern von Füller- und Decklack und somit die Verschmutzung der Fahrzeugoberfläche, insbesondere der Fensterflansch-Klebfuge.

Eine mit einem vernetzten, ungeschäumten Polyurethan beschichtete Polyesterfolie als Trägermaterial erweist sich für ein Klebeband als hervorragend geeignet, die gestellten Aufgaben zu lösen.

In einer möglichen Ausführungsform enthält die Polyurethanschicht weitere Rezeptierungsbestandteile, wie zum Beispiel Füllstoffe, Weichmacher sowie Hilfs- und Zusatzstoffe. Als Füllstoffe können sowohl verstärkende, wie zum Beispiel Ruß, als auch nicht verstärkende, wie zum Beispiel Kreide oder Bariumsulfat, eingesetzt werden. Weitere Beispiele sind Talkum, Glimmer, Kieselsäure, Silikate oder Zinkoxid. Auch Mischungen der genannten Stoffe können eingesetzt werden. Beispiele für Weichmacher sind Phthalsäureester oder Alkylsulfonsäureester des Phenols.

Das Polyurethan muß so beschaffen sein, daß es - wie bereits angeführt - die für das Einsatzgebiet typischen hohen Temperaturen von bis zu 180 °C ca. 30 Minuten übersteht. In einer möglichen Ausführungsform werden dem Polyurethan übliche Antioxidantien zugesetzt, welche die Thermooxidation des Polyurethans verzögern, und zwar im Bereich zwischen 0 Gew.-% und 5 Gew.-% sowie bekannte Lichtschutzmittel im Bereich zwischen 0 Gew.-% und 5 Gew.-%. Beispiele für Antioxidantien sind sterisch gehinderte Phenole und sekundäre aromatische Amine. Beispiele für Lichtschutzmittel sind Derivate des Benzophenons und sterisch gehinderte Amine. Zur Erzielung von Blasenfreiheit können darüber hinaus Trockenmittel, wie beispielsweise Calciumoxid oder Molekularsieb-Zeolithe der Rezeptur beigemischt werden, insbesondere im Bereich zwischen 0 Gew.-% und 10 Gew.-%.

In einer bevorzugten Ausführungsform werden zur Herstellung der Polyurethanschicht aliphatische Isocyanate eingesetzt. In Frage kommen zum Beispiel lsophorondiisocyanat, Hexamethylendiisocyanat, Dicyclohexylmethan-4,4'-diisocyanat, Gemische der genannten Isocyanate oder chemisch daraus abgeleitete Isocyanate, zum Beispiel dimerisierte, trimerisierte oder polymerisierte Typen, die beispielsweise Harnstoff-, Uretdion- oder Isocyanuratgruppen enthalten. Es können aber auch aromatische lsocyanate, wie zum Beispiel Toluylendiisocyanat oder Diphenylmethan-4,4'-diisocyanat eingesetzt werden oder Isocyanate, die aromatische Gruppen enthalten, in denen die Isocyanatgruppen selbst aber aliphatisch gebunden sind, zum Beispiel m-Tetramethyl-xylen-diisocyanat.
In einer weiteren bevorzugten Ausführungsform werden als Polyol-Komponente Polytetramethylenglykolether (Polytetrahydrofurane) eingesetzt. In Frage kommen aber auch Polyole auf Basis von Polypropylenglykol, hydroxyl-funktionalisierte Polybutadiene, hydroxyl-funktionalisierte Polyisoprene, hydrierte Versionen der beiden letztgenannten Polyole sowie Polyester.
Neben den aufgezählten Isocyanat-Komponenten und den damit reagierenden Polyol-Komponenten können aber auch andere Edukte zur Bildung des Polyurethans verwendet werden, ohne den Erfindungsgedanken zu verlassen.

Um die Reaktion zwischen der Isocyanat-Komponente und der mit dem Isocyanat reagierenden Komponente zu beschleunigen, können alle dem Fachmann bekannten Katalysatoren, wie zum Beispiel tertiäre Amine oder zinnorganische Verbindungen eingesetzt werden.

Polyurethane wie oben beschrieben sind in der Herstellung Stand der Technik und beispielsweise in "Ullmann's Encyclopedia of Industrial Chemistry, Vol. A21: Polyurethanes" beschrieben.

Die Rezeptierung der Polyurethane mit weiteren Bestandteilen, wie zum Beispiel Füllstoffen und Weichmachern, ist ebenfalls Stand der Technik und wird besonders bei der Herstellung von Dichtmassen angewendet (vgl. "Ullmann's Encyclopedia of Industrial Chemistry, Vol. A 23: Sealing Materials").

In einer weiteren bevorzugten Ausführungsform wird zur Bildung des Polyurethans ein NCO/OH-Verhältnis von 0,8 bis 1,2 eingestellt.

Die Polyesterfolie wird in einer bevorzugten Ausführungsform nach dem im folgenden beschriebenen Verfahren mit dem Polyurethan beschichtet:
a) Es werden in einem Behälter A im wesentlichen die Polyol- und in einem Behälter B im wesentlichen die Isocyanat-Komponente vorgelegt, wobei gegebenenfalls die weiteren Rezeptierungsbestandteile diesen Komponenten bereits zuvor in einem üblichen Mischverfahren zugemischt wurden.
b) In einem Mischer einer Zwei-Komponenten-Misch- und Dosieranlage werden die Polyol- und die Isocyanat-Komponente gemischt.
c) Die somit gemischte Polyurethanmasse wird auf die mit einer druckempfindlichen Haftklebemasse beschichtete Polyesterfolie aufgebracht, die sich bevorzugt mit konstanter Geschwindigkeit bewegt, wobei die Seite, auf der sich die Haftklebemasse befindet, auf ein dehäsiv ausgerüstetes Medium, zum Beispiel Trennpapier oder Trennfolie oder ein dehäsiv ausgerüstetes Gurtband aufgelegt ist.
d) Der Verbund aus Polyurethanmasse, Polyesterfolie und Haftklebemasse wird durch einen Wärmekanal geführt, in dem die Polyurethanmasse aushärtet.
e) Das Laminat wird abschließend in einer Wickelstation aufgewickelt.

In einem Vorbereitungsschritt wird die Polyesterfolie einseitig mit einer Haftklebemasse ausgerüstet. Diese Ausrüstung erfolgt in einem üblichen Beschichtungsverfahren, entweder aus einer Lösung heraus oder aus der Schmelze.

In einem alternativen Verfahren kann die Polyesterfolie auch zuerst mit dem Polyurethan beschichtet und anschließend mit einer Haftklebemasse ausgerüstet werden.

Überraschend und für den Fachmann nicht vorhersehbar erweist sich der Verbund aus Polyurethanschicht und Polyesterfolie nach dem Einbrennen der Lackschichten als wesentlich fester und stabiler als ein PVC / Polyesterverbund, so daß es beim Demaskieren nicht zum Reißen oder Spleißen des Trägermaterials kommt.
Ein weiterer Vorteil ist darin zu sehen, daß zur Herstellung des Polyurethan / Polyester-Verbundes im Gegensatz zum PVC / Polyesterverbund kein Kaschierklebstoff benötigt wird. Weiterhin kann das Material sehr vorteilhaft entsorgt werden.
Als Selbstklebemasse für das Klebeband eignen sich prinzipiell alle druckempfindlichen Klebmassen, die die geforderte Temperaturstabilität über ca. 30 min bei 180°C aufweisen und die bei diesen Temperaturen eine ausreichende Scherfestigkeit haben, um der Schrumpfneigung des Trägermaterials zu widerstehen, zum Beispiel alle vernetzbaren Naturkautschuk-, Synthesekautschuk und Acrylatklebmassen, die über eine anwendungsgerechte Klebkraft von über 2 N/cm auf KTL-Untergründen verfügen.

Eine vorteilhafte Ausführungsform der Selbstklebemasse basiert auf einem Copolymer aus Ethylen, Vinylacetat, Acrylsäureester und gegebenenfalls Acrylsäureamid. Ein solches Copolymer wird in der EP 0 017 986 A1 beschrieben.

Überraschend und für den Fachmann nicht vorhersehbar erweisen sich derartige Synthesekautschuke basierend auf den Monomeren Ethylen (E), Vinylacetat (VA) Acrylsäureestern (Ac) und Acrylsäureamiden (Acam), wie sie zum Beispiel von Air Products Polymers, Burghausen, Deutschland als Dispersionen vertrieben werden, für diese Anwendung als geeignete Klebemasse.

In einer bevorzugten Ausführungsform weist die Selbstklebemasse die folgende Zusammensetzung auf:

| | |
|---|---|
| Ethylen | 10 bis 30, besonders bevorzugt 10 bis 15 Gew.-% |
| Vinylacetat | 20 bis 55, besonders bevorzugt 30 bis 35 Gew.-% |
| Acrylsäureester | 30 bis 69, besonders bevorzugt 50 bis 60 Gew.-% |
| Acrylsäureamid | 0 bis 8, besonders bevorzugt 0,5 Gew.-% |

Die Selbstklebemasse kann auf den Träger in gelöster oder Dispersionsform aufgetragen werden, so daß nach dem Trocknen in der Wärme ein Klebefilm von vorzugsweise 15 bis 40 µm Dicke resultiert.

Je nach Affinität der Klebmasse zur Unterseite des Trägers kann ein Primer gewählt werden, um eine sichere Masseverankerung zu gewährleisten.

Weiter vorteilhaft kann auf der Rückseite des Trägermaterials ein Trennlack zur leichten Abrollbarkeit vorhanden sein, nämlich dann, wenn die Masse gut auf der Rückseite haftet. Der Trennlack empfiehlt sich insbesondere, wenn das Material ohne Trennmedium zur Rolle gewickelt werden soll. Gleichzeitig muß er eine sichere Füller- und Lackhaftung gewährleisten.

Besonders kommen die Vorteile des erfindungsgemäßen Klebebands zum Tragen, wenn dieses im Automobilbau eingesetzt wird. Nachfolgend wird ausführlich dieser Anwendungsfall geschildert, der nur beispielhaft für ähnliche Anwendungen ausgewählt ist.

Das Klebeband mit dem nach dem vorgeschlagenen Verfahren kaschierten Träger aus Weich-PVC und PET wird nach dem Elektrotauchlackiervorgang der Karosserie, in dem die KTL-Schicht auf die geprimerte Rohkarosserie aufgebracht wird, und nach dem Einbrennen der KTL-Schicht, bei dem der reaktive Roh-KTL durch thermische Einwirkung vernetzt wird, auf den Fensterflansch bevorzugt in 10 bis 25 mm Breite aufgeklebt. Dabei muß das Band um die Kurven herum gedehnt werden, damit kein Sprühnebel der nachfolgenden Lackierschritte unter etwaige Falten gelangen kann. Das Band verbleibt solange auf der Karosserie, bis alle Lackierschritte vollzogen sind. Nach Abkühlen der Karosserie kann das Band dann mitsamt den darauf haftenden Lackschichten ohne Reißen, Delaminieren und Rückstände des Klebebandes abgezogen werden. Die KTL-Spur, die nach dem Demaskieren zurückbleibt, bietet einen sicheren Haftgrund für die Verklebung von Automobilscheiben mit Hilfe von wassersensitiven Reaktivklebstoffen auf Polyurethanbasis.

Das erfindungsgemäße Klebeband wird nachfolgend in bevorzugter Ausführung anhand mehrerer Beispiele beschrieben, ohne damit die Erfindung in irgendeiner Weise beschränken zu wollen. Des weiteren sind Vergleichsbeispiele aufgeführt, in denen untaugliche Klebebänder dargestellt sind.

Die folgenden Prüfmethoden wurden eingesetzt, um die nach dem beschriebenen Verfahren hergestellten Muster kurz zu charakterisieren:
- Die Klebkraft wurde nach BDF JOPMA002 bestimmt.
   Nach dieser Methode wurde das zu prüfende Klebebandmuster auf den Haftgrund (Stahl) aufgebracht und anschließend unter definierten Bedingungen in einer Zugprüfmaschine abgezogen. Der Abzugswinkel betrug jeweils 180°, die Abzugsgeschwindigkeit 300 mm/min. Die zum Abziehen erforderliche Kraft ist die Klebkraft.
- Die Bestimmung der Reißfestigkeit und Reißdehnung erfolgte im Zugversuch nach BDF JOPMC001.

Dabei wurde ein Prüfstreifen von 100 mm Länge und 25 mm Breite in einer Zugprüfmaschine mit definierter Klemmgeschwindigkeit (300 mm/min) solange in Längsrichtung belastet, bis er riß. Ermittelt wurden die Reißfestigkeit bezogen auf den Probenquerschnitt sowie die Dehnung bei der Reißkraft.

In den Beispielen erfolgte die Beschichtung auf einer Anlage der Firma Pagendarm. Die Bahnbreite betrug 50 cm. Die Beschichtungsspaltbreite war zwischen 0 und 1 cm variabel einstellbar. Die Länge des Wärmekanals betrug ca. 12 m. Die Temperatur im Wärmekanal war in vier Zonen einteilbar und jeweils zwischen Raumtemperatur und 120 °C frei wählbar.

Es wurde eine Zweikomponenten-Misch- und Dosieranlage der Firma Spritztechnik-EMC verwendet. Das Mischsystem war dynamisch. Der Mischkopf war für zwei flüssige Komponenten konzipiert. Der Mischrotor hatte eine variable Drehzahl bis max. ca. 5000 U/min. Bei den Dosierpumpen dieser Anlage handelte es sich um Zahnradpumpen mit einer Förderleistung von max. ca. 2 /min.

Die A-Komponenten wurden in einem evakuierbaren Dissolver der Firma Molteni gefertigt.

### Beispiele

### Beispiel 1

Eine 23 µm dicke Polyesterfolie (Polyethylenterephthalat) wurde in einem üblichen Beschichtungsprozeß mit einer bekannten Naturkautschuk-basierten Haftklebemasse, bestehend aus

| | |
|---|---|
| 48 % | Naturkautschuk CV50 |
| 23 % | Poly-beta-Pinenharz |
| 5 % | Terpenphenolharz |
| 3 % | Kolophoniumharz |
| 7 % | Copolymer aus Acrylnitril und Butadien |
| 8 % | Zinkoxid |
| 5 % | reaktivem Alkylphenolharz und |
| 1 % | 2,5 Di-(tertiär-Amyl)-hydrochinon |

aus einer Lösung heraus mit einer Auftragsstärke von ca. 25 µm beschichtet und beim Aufwickeln mit einem handelsüblichen Trennpapier eingedeckt.

Die mit der Haftklebemasse ausgerüstete Polyesterfolie wurde von der nicht klebenden Seite her mit einer entgasten, zweikomponentigen Polyurethanmasse bei einer Geschwindigkeit von 1 m/min beschichtet. Die Auftragsstärke betrug 120 µm. Die Aushärtung erfolgte bei einer Kanaltemperatur von 80 °C.

Die Polyurethanmasse setzte sich wie folgt zusammen:

| | Rohstoff | Gewichtsanteil [Gew.-%] |
|---|---|---|
| A-Komponente | Arcol 1030 ® | 30,0 |
| | Arcol 1074 ® | 10,0 |
| | Dibutylzinndilaurat | 0,2 |
| | Calciumoxid | 5,0 |
| | Bayferrox 3920 ® | 1,0 |
| | Omyacarb 4BG ® | 28,3 |
| B-Komponente | Vestanat IPDI ® | 25,5 |

Das so erhaltene Klebeband wies eine Reißfestigkeit von 30,3 N/mm² bei einer Reißdehnung von 43,4 % auf. Die Klebkraft auf Stahl betrug 4,9 N/cm.

Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Die faltenfreie Kurvenverklebung erforderte erhöhten Kraftaufwand zur Dehnung der Folie. Das beklebte Blech wurde dann in Anlehnung an harte Praxisbedingungen mit einem Füller beschichtet, der 30 min lang bei 180 °C eingebrannt wurde. Nach dem Abkühlen wurde darauf eine Lösungsmittelbasislackschicht aufgetragen, die 5 min bei Raumtemperatur abgelüftet und anschließend mit einem 2-Komponenten Klarlack abgedeckt wurde. Das Blech wurde nochmals 30 min bei 130 °C im Ofen getrocknet.

Eine visuelle Beurteilung nach dem Abkühlen ergab eine unveränderte Position des Bandes gegenüber der Ursprungsposition. Anschließend wurde das Band unter verschiedenen Abzugswinkeln zwischen 45° und 180° abgezogen. Das Klebeband ließ sich einwandfrei ohne Reißen und Delaminieren vom KTL-Blech abziehen. Es blieb eine saubere, lackfreie Spur auf dem KTL-Untergrund zurück. Der Lack blieb vollständig auf der Rückseite des Bandes haften.

### Beispiel 2

Eine 23 µm dicke Polyesterfolie (Polyethylenterephthalat) wurde in einem üblichen Beschichtungsprozeß mit der in Beispiel 1 genannten Naturkautschuk-basierten Haftklebemasse aus einer Lösung heraus mit einer Auftragsstärke von ca. 25 µm beschichtet und beim Aufwickeln mit einem handelsüblichen Trennpapier eingedeckt.

Die mit der Haftklebemasse ausgerüstete Polyesterfolie wurde von der nicht klebenden Seite her mit einer entgasten, zweikomponentigen Polyurethanmasse bei einer Geschwindigkeit von 1 m/min beschichtet. Die Auftragsstärke betrug 120 µm. Die Aushärtung erfolgte bei einer Kanaltemperatur von 80 °C.

Die Polyurethanmasse setzte sich wie folgt zusammen:

| | Rohstoff | Gewichtsanteil [Gew.-%] |
|---|---|---|
| A-Komponente | Arcol 1030 ® | 30,0 |
| | Arcol 1074 ® | 10,0 |
| | Dibutylzinndilaurat | 0,2 |
| | Calciumoxid | 5,0 |
| | Bayferrox 3920 ® | 1,0 |
| | Irganox 1010 ® | 1,0 |
| | Omyacarb 4BG ® | 27,3 |
| B-Komponente | Vestanat IPDI ® | 25,5 |

Das so erhaltene Klebeband wies eine Reißfestigkeit von 31,6 N/mm² bei einer Reißdehnung von 45,6 % auf. Die Klebkraft auf Stahl betrug 4,2 N/cm.

Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Die faltenfreie Kurvenverklebung erforderte erhöhten Kraftaufwand zur Dehnung der Folie. Das beklebte Blech wurde dann in Anlehnung an harte Praxisbedingungen mit einem Füller beschichtet, der 30 min lang bei 180 °C eingebrannt wurde. Nach dem Abkühlen wurde darauf eine Lösungsmittelbasislackschicht aufgetragen, die 5 min bei Raumtemperatur abgelüftet und anschließend mit einem 2-Komponenten Klarlack abgedeckt wurde. Das Blech wurde nochmals 30 min bei 130 °C im Ofen getrocknet.

Eine visuelle Beurteilung nach dem Abkühlen ergab eine unveränderte Position des Bandes gegenüber der Ursprungsposition. Anschließend wurde das Band unter verschiedenen Abzugswinkeln zwischen 45° und 180° abgezogen. Das Klebeband ließ sich einwandfrei ohne Reißen und Delaminieren vom KTL-Blech abziehen. Es blieb eine saubere, lackfreie Spur auf dem KTL-Untergrund zurück. Der Lack blieb vollständig auf der Rückseite des Bandes haften.

### Beispiel 3

Eine 23 µm dicke Polyesterfolie (Polyethylenterephthalat) wurde mit einer entgasten, zweikomponentigen Polyurethanmasse bei einer Geschwindigkeit von 1 m/min beschichtet und beim Aufwickeln mit einem handelsüblichen Trennpapier eingedeckt. Die Auftragsstärke betrug 120 µm. Die Aushärtung erfolgte bei einer Kanaltemperatur von 80 °C.
Die Polyurethanmasse setzte sich wie folgt zusammen:

| | Rohstoff | Gewichtsanteil [Gew.-%] |
|---|---|---|
| A-Komponente | Arcol 1030 ® | 30,0 |
| | Arcol 1074 ® | 10,0 |
| | Dibutylzinndilaurat | 0,2 |
| | Calciumoxid | 5,0 |
| | Bayferrox 3920 ® | 1,0 |
| | Irganox 1010 ® | 1,0 |
| | Omyacarb 4BG ® | 27,3 |
| B-Komponente | Vestanat IPDI ® | 25,5 |

Anschließend wurde die mit der Polyurethanmasse ausgerüstete Polyesterfolie in einem üblichen Beschichtungsprozeß mit der in Beispiel 1 genannten Naturkautschuk-basierten Haftklebemasse aus einer Lösung heraus mit einer Auftragsstärke von ca. 25 µm beschichtet.

Das so erhaltene Klebeband wies eine Reißfestigkeit von 28,1 N/mm² bei einer Reißdehnung von 41,6 % auf. Die Klebkraft auf Stahl betrug 3,7 N/cm.

Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Die faltenfreie Kurvenverklebung erforderte erhöhten Kraftaufwand zur Dehnung der Folie. Das beklebte Blech wurde dann in Anlehnung an harte Praxisbedingungen mit einem Füller beschichtet, der 30 min lang bei 180 °C eingebrannt wurde. Nach dem Abkühlen wurde darauf eine Lösungsmittelbasislackschicht aufgetragen, die 5 min bei Raumtemperatur abgelüftet und anschließend mit einem 2-Komponenten Klarlack abgedeckt wurde. Das Blech wurde nochmals 30 min bei 130 °C im Ofen getrocknet.

Eine visuelle Beurteilung nach dem Abkühlen ergab eine unveränderte Position des Bandes gegenüber der Ursprungsposition. Anschließend wurde das Band unter verschiedenen Abzugswinkeln zwischen 45° und 180° abgezogen. Das Klebeband ließ sich einwandfrei ohne Reißen und Delaminieren vom KTL-Blech abziehen. Es blieb eine saubere, lackfreie Spur auf dem KTL-Untergrund zurück. Der Lack blieb vollständig auf der Rückseite des Bandes haften.

### Beispiel 4

Eine 23 µm dicke Polyesterfolie (Polyethylenterephthalat) wurde in einem üblichen Beschichtungsprozeß mit einer lösungsmittelbasierten Acrylat-Haftklebemasse, bestehend aus Butylacrylat (47,5%), Ethylhexylacrylat (47,5%), Glycidylmethacrylat (2%), Acrylsäure (3%) und geringen Mengen eines bekannten Vernetzers mit einer Auftragsstärke von ca. 25 µm beschichtet und beim Aufwickeln mit einem handelsüblichen Trennpapier eingedeckt.

Die mit der Haftklebemasse ausgerüstete Polyesterfolie wurde von der nicht klebenden Seite her mit einer entgasten, zweikomponentigen Polyurethanmasse bei einer Geschwindigkeit von 1 m/min beschichtet. Die Auftragsstärke betrug 120 µm. Die Aushärtung erfolgte bei einer Kanaltemperatur von 80 °C.

Die Polyurethanmasse setzte sich wie folgt zusammen:

| | Rohstoff | Gewichtsanteil [Gew.-%] |
|---|---|---|
| A-Komponente | Arcol 1030 ® | 30,0 |
| | Arcol 1074 ® | 10,0 |
| | Dibutylzinndilaurat | 0,2 |
| | Calciumoxid | 5,0 |
| | Bayferrox 3920 ® | 1,0 |
| | Irganox 1010 ® | 1,0 |
| | Omyacarb 4BG ® | 27,3 |
| B-Komponente | Vestanat IPDI ® | 25,5 |

Das so erhaltene Klebeband wies eine Reißfestigkeit von 33,6 N/mm² bei einer Reißdehnung von 47,6 % auf. Die Klebkraft auf Stahl betrug 3,2 N/cm.

Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Die faltenfreie Kurvenverklebung erforderte erhöhten Kraftaufwand zur Dehnung der Folie. Das beklebte Blech wurde dann in Anlehnung an harte Praxisbedingungen mit einem Füller beschichtet, der 30 min lang bei 180 °C eingebrannt wurde. Nach dem Abkühlen wurde darauf eine Lösungsmittelbasislackschicht aufgetragen, die 5 min bei Raumtemperatur abgelüftet und anschließend mit einem 2-Komponenten Klarlack abgedeckt wurde. Das Blech wurde nochmals 30 min bei 130 °C im Ofen getrocknet.

Eine visuelle Beurteilung nach dem Abkühlen ergab eine unveränderte Position des Bandes gegenüber der Ursprungsposition. Anschließend wurde das Band unter verschiedenen Abzugswinkeln zwischen 45° und 180° abgezogen. Das Klebeband ließ sich einwandfrei ohne Reißen und Delaminieren vom KTL-Blech abziehen. Es blieb eine saubere, lackfreie Spur auf dem KTL-Untergrund zurück. Der Lack blieb vollständig auf der Rückseite des Bandes haften.

### Beispiel 5

Eine 23 µm dicke Polyesterfolie (Polyethylenterephthalat) wurde in einem üblichen Beschichtungsprozeß mit einer lösungsmittelbasierten Acrylat-Haftklebemasse, bestehend aus Butylacrylat (47,5%), Ethylhexylacrylat (47,5%), Glycidylmethacrylat (2%), Acrylsäure (3%) und geringen Mengen eines bekannten Vernetzers mit einer Auftragsstärke von ca. 25 pm beschichtet und beim Aufwickeln mit einem handelsüblichen Trennpapier eingedeckt.

Die mit der Haftklebemasse ausgerüstete Polyesterfolie wurde von der nicht klebenden Seite her mit einer entgasten, zweikomponentigen Polyurethanmasse bei einer Geschwindigkeit von 1 m/min beschichtet. Die Auftragsstärke betrug 120 µm. Die Aushärtung erfolgte bei einer Kanaltemperatur von 80 °C.
Die Polyurethanmasse setzte sich wie folgt zusammen:

| | Rohstoff | Gewichtsanteil [Gew.-%] |
|---|---|---|
| A-Komponente | Arcol 1030 ® | 30,0 |
| | Arcol 1074 ® | 10,0 |
| | Dibutylzinndilaurat | 0,2 |
| | Calciumoxid | 5,0 |
| | Bayferrox 3920 ® | 1,0 |
| | Irganox 1010 ® | 1,0 |
| | Omyacarb 4BG ® | 27,3 |
| B-Komponente | Vestanat IPDI ® | 25,5 |

Das so erhaltene Klebeband wies eine Reißfestigkeit von 31,6 N/mm² bei einer Reißdehnung von 44,9 % auf. Die Klebkraft auf Stahl betrug 3,9 N/cm.

Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Die faltenfreie Kurvenverklebung erforderte erhöhten Kraftaufwand zur Dehnung der Folie. Das beklebte Blech wurde dann in Anlehnung an harte Praxisbedingungen mit einem Füller beschichtet, der 30 min lang bei 180 °C eingebrannt wurde. Nach dem Abkühlen wurde darauf eine Lösungsmittelbasislackschicht aufgetragen, die 5 min bei Raumtemperatur abgelüftet und anschließend mit einem 2-Komponenten Klarlack abgedeckt wurde. Das Blech wurde nochmals 30 min bei 130 °C im Ofen getrocknet.

Eine visuelle Beurteilung nach dem Abkühlen ergab eine unveränderte Position des Bandes gegenüber der Ursprungsposition. Anschließend wurde das Band unter verschiedenen Abzugswinkeln zwischen 45° und 180° abgezogen. Das Klebeband ließ sich einwandfrei ohne Reißen und Delaminieren vom KTL-Blech abziehen. Es blieb eine saubere, lackfreie Spur auf dem KTL-Untergrund zurück. Der Lack blieb vollständig auf der Rückseite des Bandes haften.

### Beispiel 6

Eine 23 µm dicke Polyesterfolie (Polyethylenterephthalat) wurde in einem üblichen Beschichtungsprozeß mit Vinnapas EAF 60 (Air Products Polymers, Burghausen, Deutschland) in einer Auftragsstärke von ca. 25 µm beschichtet und beim Aufwickeln mit einem handelsüblichen Trennpapier eingedeckt.

Die mit der Haftklebemasse ausgerüstete Polyesterfolie wurde analog Beispiel 4 weiterverarbeitet. Das so erhaltene Klebeband wies eine Reißfestigkeit von 30,5 N/mm² bei einer Reißdehnung von 44,3 % auf. Die Klebkraft auf Stahl betrug 2,8 N/cm.

Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Die faltenfreie Kurvenverklebung erforderte erhöhten Kraftaufwand zur Dehnung der Folie. Das beklebte Blech wurde dann in Anlehnung an harte Praxisbedingungen mit einem Füller beschichtet, der 30 min lang bei 180 °C eingebrannt wurde. Nach dem Abkühlen wurde darauf eine Lösungsmittelbasislackschicht aufgetragen, die 5 min bei Raumtemperatur abgelüftet und anschließend mit einem 2-Komponenten Klarlack abgedeckt wurde. Das Blech wurde nochmals 30 min bei 130 °C im Ofen getrocknet.

Eine visuelle Beurteilung nach dem Abkühlen ergab eine unveränderte Position des Bandes gegenüber der Ursprungsposition. Anschließend wurde das Band unter verschiedenen Abzugswinkeln zwischen 45° und 180° abgezogen. Das Klebeband ließ sich einwandfrei ohne Reißen und Delaminieren vom KTL-Blech abziehen. Es blieb eine saubere, lackfreie Spur auf dem KTL-Untergrund zurück. Der Lack blieb vollständig auf der Rückseite des Bandes haften.

### Beispiel 7

Eine 23 µm dicke Polyesterfolie (Polyethylenterephthalat) wurde in einem üblichen Beschichtungsprozeß mit der in Beispiel 1 genannten Naturkautschuk-basierten Haftklebemasse aus einer Lösung heraus mit einer Auftragsstärke von ca. 25 µm beschichtet und beim Aufwickeln mit einem handelsüblichen Trennpapier eingedeckt.

Die mit der Haftklebemasse ausgerüstete Polyesterfolie wurde von der nicht klebenden Seite her mit einer entgasten, zweikomponentigen Polyurethanmasse bei einer Geschwindigkeit von 1 m/min beschichtet. Die Auftragsstärke betrug 120 µm. Die Aushärtung erfolgte bei einer Kanaltemperatur von 80 °C.

Die Polyurethanmasse setzte sich wie folgt zusammen:

| | Rohstoff | Gewichtsanteil [Gew.-%] |
|---|---|---|
| A-Komponente | Arcol 1030 ® | 25,0 |
| | Arcol 1074 ® | 8,3 |
| | Dibutylzinndilaurat | 0,2 |
| | Palatinol N ® | 10,0 |
| | Calciumoxid | 5,0 |
| | Bayferrox 3920 ® | 1,0 |
| | Omyacarb 4BG ® | 29,2 |
| B-Komponente | Vestanat IPDI ® | 21,3 |

Das so erhaltene Klebeband wies eine Reißfestigkeit von 32,5 N/mm² bei einer Reißdehnung von 124,5 % auf. Die Klebkraft auf Stahl betrug 3,7 N/cm.

Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Die faltenfreie Kurvenverklebung erforderte erhöhten Kraftaufwand zur Dehnung der Folie. Das beklebte Blech wurde dann in Anlehnung an harte Praxisbedingungen mit einem Füller beschichtet, der 30 min lang bei 180 °C eingebrannt wurde. Nach dem Abkühlen wurde darauf eine Lösungsmittelbasislackschicht aufgetragen, die 5 min bei Raumtemperatur abgelüftet und anschließend mit einem 2-Komponenten Klarlack abgedeckt wurde. Das Blech wurde nochmals 30 min bei 130 °C im Ofen getrocknet.

Eine visuelle Beurteilung nach dem Abkühlen ergab eine unveränderte Position des Bandes gegenüber der Ursprungsposition. Anschließend wurde das Band unter verschiedenen Abzugswinkeln zwischen 45° und 180° abgezogen. Das Klebeband ließ sich einwandfrei ohne Reißen und Delaminieren vom KTL-Blech abziehen. Es blieb eine saubere, lackfreie Spur auf dem KTL-Untergrund zurück. Der Lack blieb vollständig auf der Rückseite des Bandes haften.

### Beispiel 8

Eine 23 µm dicke Polyesterfolie (Polyethylenterephthalat) wurde in einem üblichen Beschichtungsprozeß mit der in Beispiel 1 genannten Naturkautschuk-basierten Haftklebemasse aus einer Lösung heraus mit einer Auftragsstärke von ca. 25 µm beschichtet und beim Aufwickeln mit einem handelsüblichen Trennpapier eingedeckt.

Die mit der Haftklebemasse ausgerüstete Polyesterfolie wurde von der nicht klebenden Seite her mit einer entgasten, zweikomponentigen Polyurethanmasse bei einer Geschwindigkeit von 1 m/min beschichtet. Die Auftragsstärke betrug 120 µm. Die Aushärtung erfolgte bei einer Kanaltemperatur von 80 °C.
Die Polyurethanmasse setzte sich wie folgt zusammen:

| | Rohstoff | Gewichtsanteil [Gew.-%] |
|---|---|---|
| A-Komponente | Arcol 1030 ® | 25,0 |
| | Poly bd R 45 HT ® | 8,3 |
| | Dibutylzinndilaurat | 0,2 |
| | Palatinol N ® | 10,0 |
| | Calciumoxid | 5,0 |
| | Bayferrox 3920 ® | 1,0 |
| | Omyacarb 4BG ® | 28,9 |
| B-Komponente | Vestanat IPDI ® | 21,6 |

Das so erhaltene Klebeband wies eine Reißfestigkeit von 34,8 N/mm² bei einer Reißdehnung von 116,4 % auf. Die Klebkraft auf Stahl betrug 3,5 N/cm.

Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Die faltenfreie Kurvenverklebung erforderte erhöhten Kraftaufwand zur Dehnung der Folie. Das beklebte Blech wurde dann in Anlehnung an harte Praxisbedingungen mit einem Füller beschichtet, der 30 min lang bei 180 °C eingebrannt wurde. Nach dem Abkühlen wurde darauf eine Lösungsmittelbasislackschicht aufgetragen, die 5 min bei Raumtemperatur abgelüftet und anschließend mit einem 2-Komponenten Klarlack abgedeckt wurde. Das Blech wurde nochmals 30 min bei 130 °C im Ofen getrocknet.

Eine visuelle Beurteilung nach dem Abkühlen ergab eine unveränderte Position des Bandes gegenüber der Ursprungsposition. Anschließend wurde das Band unter verschiedenen Abzugswinkeln zwischen 45° und 180° abgezogen. Das Klebeband ließ sich einwandfrei ohne Reißen und Delaminieren vom KTL-Blech abziehen. Es blieb eine saubere, lackfreie Spur auf dem KTL-Untergrund zurück. Der Lack blieb vollständig auf der Rückseite des Bandes haften.

### Beispiel 9

Eine 23 µm dicke Polyesterfolie (Polyethylenterephthalat) wurde in einem üblichen Beschichtungsprozeß mit der in Beispiel 1 genannten Naturkautschuk-basierten Haftklebemasse aus einer Lösung heraus mit einer Auftragsstärke von ca. 25 µm beschichtet und beim Aufwickeln mit einem handelsüblichen Trennpapier eingedeckt.

Die mit der Haftklebemasse ausgerüstete Polyesterfolie wurde von der nicht klebenden Seite her mit einer entgasten, zweikomponentigen Polyurethanmasse bei einer Geschwindigkeit von 1 m/min beschichtet. Die Auftragsstärke betrug 120 µm. Die Aushärtung erfolgte bei einer Kanaltemperatur von 80 °C.
Die Polyurethanmasse setzte sich wie folgt zusammen:

| | Rohstoff | Gewichtsanteil [Gew.-%] |
|---|---|---|
| A-Komponente | Poly THF 250 ® | 14,3 |
| | Poly THF 650 ® | 37,6 |
| | Dibutylzinndilaurat | 0,1 |
| | Aerosil R 202 ® | 2,0 |
| | Calciumoxid | 10,0 |
| | Bayferrox 3920 ® | 1,3 |
| B-Komponente | Desmodur CD ® | 34,7 |

Das so erhaltene Klebeband wies eine Reißfestigkeit von 48,8 N/mm² bei einer Reißdehnung von 116,4 % auf. Die Klebkraft auf Stahl betrug 3,5 N/cm.

Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Die faltenfreie Kurvenverklebung erforderte erhöhten Kraftaufwand zur Dehnung der Folie. Das beklebte Blech wurde dann in Anlehnung an harte Praxisbedingungen mit einem Füller beschichtet, der 30 min lang bei 180 °C eingebrannt wurde. Nach dem Abkühlen wurde darauf eine Lösungsmittelbasislackschicht aufgetragen, die 5 min bei Raumtemperatur abgelüftet und anschließend mit einem 2-Komponenten Klarlack abgedeckt wurde. Das Blech wurde nochmals 30 min bei 130 °C im Ofen getrocknet.

Eine visuelle Beurteilung nach dem Abkühlen ergab eine unveränderte Position des Bandes gegenüber der Ursprungsposition. Anschließend wurde das Band unter verschiedenen Abzugswinkeln zwischen 45° und 180° abgezogen. Das Klebeband ließ sich einwandfrei ohne Reißen und Delaminieren vom KTL-Blech abziehen. Es blieb eine saubere, lackfreie Spur auf dem KTL-Untergrund zurück. Der Lack blieb vollständig auf der Rückseite des Bandes haften.

### Vergleichsbeispiel 10

Eine 25 µm dicke PET-Folienbahn wurde mit einer Lösung aus 2 Teilen Naturkautschuk in Toluol, die mit 1 Teil Diphenylmethandiisocyanat gemischt worden war, geprimert und nach dem Trocknen mit einer Naturkautschukklebemasse nachgestrichen.

Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Die faltenfreie Kurvenverklebung erforderte erhöhten Kraftaufwand zur Dehnung der Folie. Das beklebte Blech wurde dann in Anlehnung an harte Praxisbedingungen mit einem Füller beschichtet, der 30 min lang bei 180°C eingebrannt wurde. Nach dem Abkühlen wurde darauf eine Lösungsmittelbasislackschicht aufgetragen, die 5 min bei Raumtemperatur abgelüftet und anschließend mit einem 2-Komponenten Klarlack abgedeckt wurde. Das Blech wurde nochmals 30 min bei 130 °C im Ofen getrocknet.

Eine visuelle Beurteilung nach dem Abkühlen ergab eine unveränderte Position des Bandes gegenüber der Ursprungsposition. Anschließend wurde das Band unter verschiedenen Abzugswinkeln zwischen 45° und 180° abgezogen. Das Klebeband riß beim Abziehen mehrfach von der Kante ausgehend ab. Beim Abziehen splitterte der Lack zum Teil von der Rückseite des Bandes ab.

### Vergleichsbeispiel 11

Eine 25 µm dicke PET-Folienbahn wurde beidseitig mit einer Lösung aus 2 Teilen Naturkautschuk in Toluol, die mit 1 Teil Diphenylmethandiisocyanat gemischt worden war, geprimert.
Eine Weich-PVC Folie von 90 µm Dicke, die zuvor mit einer Nitrilkautschuk/Naturkautschuklösung geprimert worden war, wurde mit einer Lösung einer Naturkautschukklebemasse in Benzin mit 30 Gewichtsprozent Feststoffgehalt bestrichen. Diese bestand aus 50 Teilen Naturkautschuk, 10 Teilen Zinkoxid, 3 Teilen Kolophoniumharz, 6 Teilen Alkylphenolharz, 17 Teilen Terpenphenolharz, 12 Teilen Poly-ß-Pinenharz und 2 Teilen Goldöl. Die Strichstärke wurde so gewählt, daß nach dem Trocknen in der Wärme ein Klebfilm von 30 µm Dicke resultierte.

Unmittelbar nach dem Trocknen vor der Aufwicklung der Folienbahn wurde die geprimerte PET-Folie zugeführt und zwischen zwei Kaschierwalzen unter hohem Druck faltenfrei fest angewalzt. Wurden die beiden Folien an einer Zugprüfmaschine im Winkel von 90° bei einer Geschwindigkeit von 300 mm/min auseinandergezogen, ergab sich eine Delaminierfestigkeit von 6,2 N/cm.

Die bereits geprimerte PET-Unterseite des Laminats wurde mit einer Naturkautschukklebemasse nachgestrichen.

Es wurde ein Testblech elektrophoretisch mit dem KTL Cathoguard 400 von BASF beschichtet und bei 175 °C 20 min lang eingebrannt. Das Klebeband wurde in 20 mm Breite und 30 cm Länge S-kurvenförmig blasenfrei auf die Testbleche geklebt und fest angedrückt. Die faltenfreie Kurvenverklebung erforderte erhöhten Kraftaufwand zur Dehnung der Folie. Das beklebte Blech wurde dann in Anlehnung an harte Praxisbedingungen mit einem Füller beschichtet, der 30 min lang bei 180 °C eingebrannt wurde. Nach dem Abkühlen wurde darauf eine Lösungsmittelbasislackschicht aufgetragen, die 5 min bei Raumtemperatur abgelüftet und anschließend mit einem 2 Komponenten Klarlack abgedeckt wurde. Das Blech wurde nochmals 30 min bei 130 °C im Ofen getrocknet.

Eine visuelle Beurteilung nach dem Abkühlen ergab eine unveränderte Position des Bandes gegenüber der Ursprungsposition. Anschließend wurde das Band unter verschiedenen Abzugswinkeln zwischen 45° und 180° abgezogen. Das Klebeband delaminierte nach einigen Zentimetem beim Abziehen vom KTL-Blech ohne erkennbaren Anlaß. In einem Fall blieb ein kleines Stück Polyesterfolie auf dem Blech zurück, ohne daß es zum vollständigen Delaminieren kam. Der Lack blieb vollständig auf der Rückseite des Bandes haften.

## Patentansprüche

1. Einseitig mit einer Selbstklebemasse ausgerüstetes Klebeband, umfassend ein Trägermaterial aus einer mit einem vernetzten, ungeschäumten Polyurethan beschichteten Polyesterfolie.

2. Klebeband nach Anspruch 1, dadurch gekennzeichnet, daß das vernetzte, ungeschäumte Polyurethan als weitere Rezeptierungsbestandteile Füllstoffe, Weichmacher und gegebenenfalls Hilfs- und Zusatzstoffe enthält.

3. Klebeband nach den Ansprüchen 1 und 2, dadurch gekennzeichnet, daß zur Bildung des vernetzten, ungeschäumten Polyurethans ein NCO / OH - Verhältnis von 0,8 bis 1,2 eingestellt wird.

4. Klebeband nach den Ansprüchen 1 bis 3, dadurch gekennzeichnet, daß auf der Rückseite des Polyurethans ein Trennlack vorhanden ist.

5. Klebeband nach zumindest einem der vorherigen Ansprüche, dadurch gekennzeichnet, daß die Selbstklebemasse die folgende Zusammensetzung aufweist:
| | |
|---|---|
| Ethylen | 10 bis 30, besonders bevorzugt 10 bis 15 Gew.-% |
| Vinylacetat | 20 bis 55, besonders bevorzugt 30 bis 35 Gew.-% |
| Acrylsäureester | 30 bis 69, besonders bevorzugt 50 bis 60 Gew.-% |
| Acrylsäureamid | 0 bis 8, besonders bevorzugt 0,5 Gew.-% |

6. Klebeband nach zumindest einem der vorherigen Ansprüche, dadurch gekennzeichnet, daß die Selbstklebemasse eine Dicke von 15 bis 40 µm aufweist.

7. Verwendung eines Klebebandes nach zumindest einem der vorherigen Ansprüche zur Fensterflanschmaskierung.

8. Verfahren zur Herstellung eines Klebebands nach zumindest einem der vorherigen Ansprüche 1, dadurch gekennzeichnet, daß die gemischten Ausgangskomponenten des Polyurethans während ihrer chemischen Reaktionsphase direkt auf der Polyesterfolie ausgestrichen werden.

9. Verfahren nach Anspruch 1, dadurch gekennzeichnet, daß die Polyesterfolie vor der Beschichtung mit dem Polyurethan mit der Selbstklebemasse ausgerüstet wird.
